(19) Europäisches Patentamt
European Patent Office
Office européen des brevets

(11) **EP 2 847 555 B1**

(12) **EUROPÄISCHE PATENTSCHRIFT**

(45) Veröffentlichungstag und Bekanntmachung des Hinweises auf die Patenterteilung:
**15.11.2023  Patentblatt 2023/46**

(21) Anmeldenummer: **13719295.1**

(22) Anmeldetag: **25.04.2013**

(51) Internationale Patentklassifikation (IPC):
**G01F 25/00** *(2022.01)*      **G01F 1/66** *(2022.01)*
**G01F 1/667** *(2022.01)*      **G01F 25/10** *(2022.01)*

(52) Gemeinsame Patentklassifikation (CPC):
**G01F 1/667; G01F 1/668; G01F 25/10**

(86) Internationale Anmeldenummer:
**PCT/EP2013/058578**

(87) Internationale Veröffentlichungsnummer:
**WO 2013/167385 (14.11.2013 Gazette 2013/46)**

(54) **VERFAHREN ZUR ÜBERWACHUNG DES BETRIEBSZUSTANDES EINES ULTRASCHALLWANDLERS IN EINEM ULTRASCHALL-DURCHFLUSSMESSGERÄT**

METHOD FOR MONITORING THE OPERATING STATE OF AN ULTRASONIC TRANSDUCER IN AN ULTRASONIC FLOW RATE MEASURING DEVICE

PROCÉDÉ DE SURVEILLANCE DE L'ÉTAT DE FONCTIONNEMENT D'UN TRANSDUCTEUR D'ULTRASONS DANS UN APPAREIL DE MESURE DE DÉBIT À ULTRASONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.05.2012  DE 102012104042**

(43) Veröffentlichungstag der Anmeldung:
**18.03.2015  Patentblatt 2015/12**

(73) Patentinhaber: **Endress+Hauser Flowtec AG
4153 Reinach (BL) (CH)**

(72) Erfinder:
• **BEZDEK, Michal
4147 Aesch (CH)**
• **UEBERSCHLAG, Pierre
68300 Saint-Louis (FR)**

(74) Vertreter: **Penner, Paul
Endress + Hauser Group Services
(Deutschland) AG+Co. KG
PatServe
Colmarer Straße 6
79576 Weil am Rhein (DE)**

(56) Entgegenhaltungen:
DE-A1-102010 035 859    US-A1- 2009 240 453

• **Flexim Gmbh Firmware V5: "User Manual UMFLUXUS_G7V4-0-2EN Ultrasonic Flowmeter for Gas", , 16 March 2011 (2011-03-16), pages 1-276, XP055810603, Retrieved from the Internet: URL:https://www.insatech.com/downloads/UMFLUXUS_G7V4-0-2EN.pdf [retrieved on 2021-06-04]**

**Beschreibung**

Die Erfindung betrifft ein Verfahren zur Überwachung des Betriebszustandes eines Ultraschallwandlers in einem Ultraschall-Durchflussmessgerät.

Ultraschall-Durchflussmessgeräte geben neben den Daten hinsichtlich der Fließgeschwindigkeit eines Mediums und der Schallgeschwindigkeit von Ultraschallsignalen in dem Medium auch Informationen über Signalstärken und das Signal-zu-Rauschen Verhältnis aus. Die Bewertung dieser Größen und der Toleranzen ist allerdings Experten überlassen. Daher kann der normale Anlagen-Techniker, welcher mit der Bedienung der Anlage und des Gerätes betraut ist, nur schwer abschätzen, ob ein Ausfall des Messgerätes droht. Es sind Ultraschall-Durchflussmessgeräte bekannt, die einen kritischen Zustand des Messsystems anzeigen, beispielsweise eine zu niedrige Signalstärke. Dies erfolgt allerdings erst, wenn gar kein Signal mehr auffindbar ist und die Messung bereits ausgefallen ist.

Die DE 10 2010 035859 A1 lehrt einen Ultraschall-Gasdurchflusssensor mit einer Auswerteelektronik, die dazu eingerichtet ist jeweils ein Qualitätskriterium aus der durch einen Temperatursensor ermittelten Temperatur des Gases und aus der mittels der Laufzeit des Schallsignales ermittelten Temperatur des Gases zu bestimmen und diese beiden miteinander zu vergleichen. Bei Abweichung der Werte für die beiden Qualitätskriterien wird eine Meldung ausgegeben. Die Überwachung des Betriebszustandes eines Ultraschallwandlers wird über den Vergleich zweier unabhängig voneinander ermittelten Prozessgrößen realisiert.

Die US 2009/240453 A1 offenbart eine Methode zur Vorhersage eines aufkommenden Betriebsausfalles eines Messwandlerpaares. Dabei werden die Messsignale zweier Messwandlerpaare miteinander verglichen und eine Vorhersage wird anhand der Performance und vorgegebener Schwellwerte gemacht. Die Überwachung des Betriebszustandes eines Ultraschallwandlers wird über den Vergleich zweier unabhängig voneinander messenden Messwandlerpaaren realisiert.

Ausgehend davon ist es Aufgabe der vorliegenden Erfindung ein Verfahren zur Überwachung des Betriebszustandes von einem Ultraschallwandler in einem Messgerät bereitzustellen.

Die Erfindung löst diese Ausgabe durch ein Verfahren mit den Merkmalen des Anspruchs 1.

Durch den Vergleich des simulierten Sollwertes der Signalstärke oder des Signal-zu-Rauschen-Verhältnisses mit dem ermittelten Realwert kann der Anlagen-Techniker ohne Weiteres eine Abschätzung hinsichtlich des Betriebszustandes und eines drohenden Ausfalls des Ultraschallwandlers treffen.

Vorteilhafte Eigenschaften der Erfindung sind Gegenstand der Unteransprüche.

Die Simulation eines Sollwertes einer Signalstärke oder des Signal-zu-Rauschen-Verhältnisses erfolgt anhand der ersten, zweiten und dritten Werte. So kann z.B. im Fall von Flüssigkeiten die Signalstärke im Wesentlichen von der Dimensionierung des Messrohres, von der Dämpfung des Ultraschallsignals im Medium und der Temperatur des Mediums abhängen. Die Dimensionierung des Messrohres kann durch die Einbeziehung der Pfadlänge in den simulierten Wert berücksichtigt werden. Die Dämpfung des Ultraschallsignals im Medium kann durch die Temperatur ermittelt werden und im simulierten Wert berücksichtigt werden.

Insbesondere bei der Simulation des Sollwertes einer Signalstärke bei Gasen wird, vorzugsweise zusätzlich zur Pfadlänge, als erster Wert der Sensorwinkel des ersten

Ultraschallwandlers im Messrohr vorteilhaft bereitgestellt. Die Bereitstellung dieses ersten Wertes für einen Sensorwinkel, insbesondere in Verbindung mit der Schallgeschwindigkeit, ermöglicht es bei der Simulation des Sollwertes die Ablenkung bzw. Verwehung des Ultraschallsignals bei höheren Strömungsgeschwindigkeiten in Strömungsrichtung und die damit verbundene Verringerung der Signalstärke zu berücksichtigen.

Insbesondere bei Gasen kann darüber hinaus durch Ermittlung des Druckes die Signalverstärkung beim zunehmenden Drücken für die Ermittlung des Sollwertes vorteilhaft berücksichtigt werden.

Die Simulation des Sollwertes der Signalstärke unter Einbeziehung der ersten, zweiten und dritten Werte kann vorzugsweise durch Berechnung eines Prozess-Terms erfolgen, welcher die Einflüsse der Eigenschaften des Mediums und/oder der Geometrie des Messrohres und/oder der Ausrichtung des Ultraschallwandlers auf die Signalstärke eines Ultraschallsignals anhand der ersten, zweiten und dritten Werte beschreibt.

Nachfolgend wird die Erfindung anhand des Ausführungsbeispiels anhand einer beigefügten Zeichnung näher beschrieben. Es zeigt:

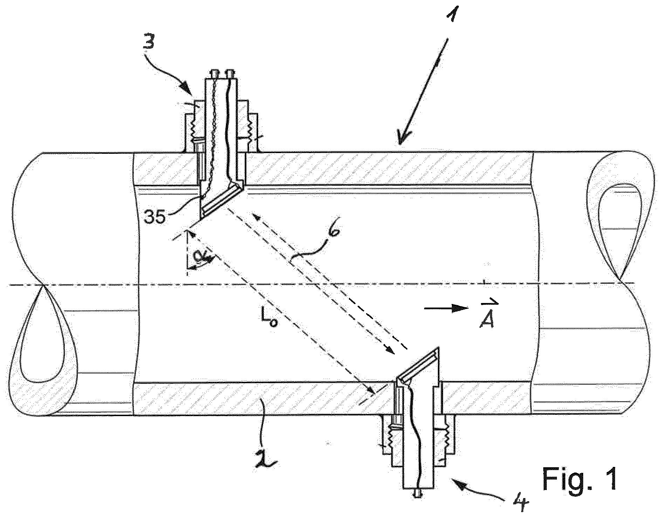

Fig.1 schematische Darstellung eines Ultraschall-Durchflussgerätes.

Fig. 1 zeigt ein an sich bekanntes Ultraschall-Durchflussmessgerät 1, welches ein Messrohr 2 mit zwei Ultraschallwandlern 3 und 4 umfasst. Dabei sendet der erste Ultraschallwandler 3 zu einem Zeitpunkt t ein erstes Ultraschallsignal schräg in Strömungsrichtung A aus, welches anschließend vom zweiten Ultraschallwandler 4 detektiert wird. Der zurückgelegte Weg wird als Signalpfad 6 bezeichnet und weist eine Pfadlänge $L_0$ auf. Anschließend sendet der zweite Ultraschallwandler 4 ein zweites Ultraschallsignal schräg entgegen der Strömungsrichtung A aus, welches vom ersten Ultraschallwandler 3 detektiert wird. Das erste Ultraschallsignal, welches schräg in Strömungsrichtung A ausgesandt wurde, benötigt eine Zeit $t_{down}$ zur Absolvierung des Signalpfades 6. Das zweite Ultraschallsignal, welches schräg entgegen der Strömungsrichtung A ausgesandt wurde, benötigt eine Zeit $t_{up}$ zur Absolvierung des Signalpfades 6, wobei

$t_{down}$ kleiner ist als $t_{up}$.

Aus der Zeitdifferenz von $t_{up}$-$t_{down}$ kann die Fließgeschwindigkeit u anhand der folgenden Formel ermittelt werden:

$$\upsilon = K \frac{L_0}{2\sin\alpha} \cdot \frac{t_{up} - t_{down}}{t_{up} \cdot t_{down}}$$

,wobei $L_0$ die Pfadlänge des Signalpfades 6 im Medium in Millimeter, $\alpha$ der Sensorwinkel, gemessen von der Normalen des Messrohres, in ° und K eine das Strömungsprofil beschreibende Funktion darstellt.

Die Schallgeschwindigkeit c des im Meßrohr 2 strömenden Mediums kann nach der Formel

$$c = \frac{L_0}{2}\left[\frac{1}{t_{up}} + \frac{1}{t_{down}}\right]$$

oder, bei Gasen, gemäß der Formel

$$c = \sqrt{\frac{\gamma R T}{M}}$$

(ideale Gasgleichung) ermittelt werden, wobei $\gamma$ die spezifische Wärmekapazität des im Messrohr 2 strömenden Mediums, $R$ die universelle Gaskonstante (R = 8.3143 J/mol K), $T$ die absolute Temperatur in Kelvin und $M$ das Molekulargewicht des Mediums in Kilogramm darstellt. Im Fall von Gasgemischen setzt sich die spezifische Wärmekapazität aus Einzeltermen der spezifischen Wärmekapazitäten der Komponenten zusammen. Auch das Molekulargewicht des Gasgemisches berechnet sich aus Einzeltermen der Molekulargewichte der Komponenten. Die Methode der Berechnung dieser Werte des Gasgemisches wird im Einzelnen in der DE 10 2006 030 964.2 der Anmelderin näher ausgeführt.

Die Schallgeschwindigkeit c und die Fließgeschwindigkeit $\upsilon$ können somit durch Laufzeitdifferenzmethode bei bekannter Pfadlänge $L_0$, Sensorwinkel $\alpha$ und bei bekanntem Strömungsprofil direkt durch das Ultraschall-Durchflussmessgerät 1 gemessen werden. Dabei ist die Positionierung der Ultraschallwandler 3 und 4 im Messrohr 2 nicht auf diese Anordnung beschränkt, sondern auch grundsätzlich auf alle anderen Anordnungen von Ultraschallwandlern zur Messung der Laufzeitdifferenz anwendbar, so z.B. bei einer Anordnung bei welcher sich die Ultraschallwandler auf gegenüberliegenden Seiten des Messrohres befinden, wie dies beispielsweise in der DE 10 2006 030 954.2 dargestellt ist. Mit zunehmender Betriebsdauer des Ultraschall-Durchflussmessgerätes können vermehrt Alterungserscheinungen, Verschmutzungen oder schleichende Defekte an den Ultraschallwandlern auftreten. Daher ist es äußerst nützlich den Zustand des Ultraschall-Durchflussmessgerätes 1 und respektive der Ultraschallwandler 3 und 4 zu überwachen. Diese Überwachung erfolgt durch ein erfindungsgemäßes Verfahren zur Diagnose des Betriebszustandes eines Ultraschallwandlers.

Das erfindungsgemäße Verfahren läuft über einen Abgleich bzw. Vergleich einer zum Zeitpunkt $t_1$ gemessenen Signalstärke $SS_{Mess}$ mit einem Vergleichswert bzw. Sollwert einer simulierten Signalstärke $SS_{Simulation}$ ab, welche vorzugsweise ebenfalls zum Zeitpunkt $t_1$ ermittelt wurde.

Das Verfahren dient in erster Linie zur Überwachung des Betriebszustandes des ersten Ultraschallwandlers 3 im Ultraschall-Durchflussmessgerät 1 mit zumindest dem Messrohr 2 und zumindest den zwei Ultraschallwandlern 3 und 4, kann aber auch vorteilhaft dahingehend erweitert werden, dass die Ausfallwahrscheinlichkeit des Ultraschallwandlers 3 vorherbestimmt wird.

Dabei weist das Verfahren folgende Schritte auf:
In einem ersten Schritt a) erfolgt ein Bereitstellung eines ersten Wertes oder mehrerer ersten Werte, der sich auf die geometrische Anordnung des ersten Ultraschallwandlers 3 im Messrohr 2 und/oder auf die geometrische Anordnung des ersten Ultraschallwandlers 3 zum zweiten Ultraschallwandler 4 bezieht.

Ein Bereitstellen im Sinne der vorliegenden Erfindung bedeutet entweder die Angabe bereits bekannter Daten oder eine Ermittlung eines Wertes im Verfahren oder eine dem Verfahren vorgeschaltete Ermittlung eines entsprechenden Wertes, welcher im Anschluss, beispielsweise über ein Interface, an das Ultraschall-Durchflussmessgerät 1 weitergegeben wird.

In einem zweiten Schritt b) erfolgt eine Ermittlung eines zweiten Wertes oder mehrerer zweiten Werte für eine Fließgeschwindigkeit eines im Messrohr 2 befindlichen Mediums im Verfahren. Dieser Wert wird grundsätzlich bei einem Ultraschall-Durchflussmessgerät immer ermittelt, im vorliegenden Fall wird er allerdings auch für die Simulation der Signalstärke $SS_{Simulation}$ genutzt.

Optional kann einem weiteren Schritt eine Ermittlung eines vierten Wertes oder mehrerer vierter Werte für eine Schallgeschwindigkeit eines im Messrohr 2 befindlichen Mediums im Verfahren erfolgen. Dieser Wert wird grundsätzlich bei der Ermittlung der Fließgeschwindigkeit bei einem Ultraschall-Durchflussmessgerät immer zusätzlich ermittelt, im vorliegenden Fall wird er allerdings auch für die Simulation der Signalstärke $SS_{Simulation}$ genutzt, insbesondere bei Gasanwendungen, genutzt.

In einem dritten Schritt c) erfolgt eine Bereitstellung eines vierten Wertes und/oder mehrerer vierter Werte für die Temperatur T und/oder den Druck p des im Messrohr 2 befindlichen Mediums. Die Temperatur T und der Druck p können vorzugsweise durch weitere im Ultraschall-Durchflussmessgerät 1 angeordnete Sensoren bestimmt werden, wodurch größere Abweichungen der Werte des Mediums durch größere Messstrecken vermieden werden. Alternativ kann auch eine manuelle Eingabe bei bekannter Temperatur und/oder Druck des Mediums oder eine dem Verfahren vorgeschaltete Bestimmung dieser Werte erfolgen.

Das Verfahren ist auf keine konkrete Schrittabfolge der ersten drei Schritte a)-c), sowie die optionale Ermittlung der Schallgeschwindigkeit beschränkt. So kann beispielsweise auch die Bereitstellung des vierten Wertes für die Temperatur und/oder Druck vor der Ermittlung der Fließgeschwindigkeit erfolgen.

Nach der Bereitstellung oder Ermittlung der vorgenannten Werte kann in einem Schritt d) eine Simulation eines Sollwertes einer Signalstärke unter Einbeziehung der ersten, zweiten dritten und vierten Werte erfolgen.

Diese Simulation ist nachfolgend näher erläutert:

Der Sollwert der simulierten Signalstärke $SS_{Simulation}$ setzt sich vorzugsweise aus einem Startwert SW und einem Wert für die Prozessdämpfung PD zusammen. Der Startwert ist ein vorgegebener Wert, welcher durch Vorversuche experimentell ermittelt wurde und werksseitig voreingestellt werden kann. Von diesem Startwert SW wird die Prozessdämpfung PD abgezogen. In der Prozessdämpfung PD fließen unterschiedliche Faktoren der Messbedingungen hinsichtlich der geometrischen Anordnung des Ultraschallwandlers 3 und der Eigenschaften des zu messenden Mediums ein, welche sich im Realfall abschwächend oder verstärkend auf die Signalstärke des Ultraschallsignals auswirken.

Die Grundformel zur Berechnung des Sollwertes der simulierten Signalstärke $SS_{Simulation}$ lautet:

$$SS_{Simulation} = SW\ (Startwert) - PD\ (Prozessdämpfung)$$

Die Prozessdämpfung PD beinhaltet im bevorzugten Fall des Messens von Biogas vorzugsweise die Diffraktion, nachfolgend D genannt, die Mediumsdämpfung, nachfolgend MD genannt, die Ablenkung, nachfolgend A genannt und die Druckverstärkung, nachfolgend DV genannt.

$$PD = D + MD + A - DV$$

Sofern Flüssigkeiten als zu messendes Medium gewählt werden fallen die Werte für die Ablenkung und die Druckverstärkung gegenüber der Diffraktion und der Mediumsdämpfung kaum ins Gewicht, beispielsweise aufgrund der Inkompressibilität von Flüssigkeiten, und sind daher vernachlässigbar. Somit ergibt sich für die Prozessdämpfung von Flüssigkeiten:

$$PD = D + MD$$

Die Mediumsdämpfung, insbesondere die Gasdämpfung, ist bei einigen Medien z.T. vernachlässigbar gering gegenüber den anderen Beeinflussungsfaktoren. Dies gilt vorzugsweise für Luft, Stickstoff, Sauerstoff, Wasserstoff und die Dämpfung in Wasser für begrenzte Pfadlängen, vorzugsweise bis zu 500 mm. Somit ergibt sich für die Prozessdämpfung von Luft:

$$PD = D + A - DV$$

Die Diffraktion D beschreibt die Verringerung der Signalstärke bei zunehmender Länge des Signalpfades 6 aufgrund der Ausbreitung des Schalls im Raum. Es ist bekannt, dass Ultraschallsignale sich als Wellen unter Ausbildung eines keulenförmigen Profils bzw. eines Profils mit radial zunehmenden Kreisabschnitten im Medium ausbreiten. Bei größerer Länge des Signalpfades 6 wird allerdings die Amplitude der Ultraschallwellen geringer und somit nimmt die Signalstärke ab.

Der Ausgleich dieser konstruktiv bedingten Abnahme der Signalstärke wird im Term der Diffraktion D durch folgende Gleichung berücksichtigt:

$$D = a\ L_0 - b$$

Aus dieser linearen Gleichung erkennt man, dass die Diffraktion proportional ist zur Pfadlänge im Medium. Die Konstante a kann vorzugsweise zwischen 0,1 und 0,01, besonders bevorzugt zwischen 0,04 und 0,08 liegen. Die Konstante b beträgt vorzugsweise zwischen 2-10, vorzugsweise zwischen 5-8, wobei [a] = dB/mm, [b] = dB

Bei der Ermittlung der Prozessdämpfung kann die Mediumsdämpfung MD eine wichtige Rolle spielen. Dies gilt sowohl für die Schalldämpfung in Flüssigkeiten als auch in Gasen. Bei der Mediumsdämpfung handelt es sich um eine Schalldämpfung im zu messenden Medium.

Bei einigen Gasen, vorzugsweise bei Methan, besteht ein linearer Zusammenhang zwischen der Mediumsdämpfung, genauer gesagt der Gasdämpfung, und der Pfadlänge, gemäß der allgemeinen Formel

$$MD = d\,L_0 + e,$$

wobei e im Fall einer Methanmessung vorzugsweise Null ist und d vorzugsweise zwischen 0,1 und 0,3 liegt, wobei die Koeffizienten die Einheiten [d] = dB/mm und [e] = dB, wobei vorzugsweise e = 0 aufweisen.

Im Fall von Gaszusammensetzungen mit gesättigtem Wasserdampf, vorzugsweise bei Biogas, ist die der Koeffizient d der Gasdämpfung eine quadratische Funktion der Temperatur des Mediums $T_{Medium}$ in °C mit folgender Formel:

$$d = (f\,T^2 - g\,T + h)\,/100$$

Im Fall einer Messung von Biogas beträgt die Konstante f vorzugsweise einen Wert zwischen 0,0005 bis 0,0015; die Konstante g vorzugsweise einen Wert zwischen 0,05 bis 0,3 und die Konstante h einen Wert zwischen 10 bis 20, wobei [f] = dB/(mm*K$^2$), [g] = dB/(mm*K) und [h] = dB/mm.

Ein weiterer Wert, welcher einen prozessbedingten Einfluss auf die Signalstärke hat, ist die Ablenkung A. Der in Fig. 1 dargestellte Signalpfad 6 ist lediglich eine Darstellung des Verlaufes eines Ultraschallsignals bei langsamer Fließgeschwindigkeit. Bei höheren Fließgeschwindigkeiten kommt es zunehmend zu Verwehungen des Ultraschallsignals, so dass das Signal mit voller Signalstärke beim zuvor beschriebenen ersten Ultraschallsignal, welches schräg in Strömungsrichtung A ausgesandt wurde, erst hinter dem eigentlichen messenden Ultraschallwandler 4 auftrifft und somit nur die Signalstärke eines Randbereichs des Signals durch den Ultraschallwandler 4 empfangen wird. Gleiches gilt für das zweite Ultraschallsignal, wobei dieses vor dem entsprechenden messenden Ultraschallwandler 3 auftrifft. Um diese Verwehungseffekte bei zunehmender Fließgeschwindigkeit auszugleichen erfolgt eine Ausgleichsdämpfung unter Einbeziehung des Ablenkungswinkels AW in °. Dieser berechnet sich nach folgender Formel:

$$AW = \alpha - \arctan\frac{c\sin(\alpha) - \upsilon}{c\cos(\alpha)}$$

Dabei ist der Winkel $\alpha$ der Sensorwinkel in Grad und beträgt vorzugsweise bis zu 50°, besonders bevorzugt zwischen 15-45°, besonders bevorzugt zwischen 20-30°, insbesondere 25°. Die Fließgeschwindigkeit u des Mediums und die Schallgeschwindigkeit c im Medium, jeweils in m/s, wird im Rahmen der Ultraschallmessung ermittelt. Die Ablenkung A berechnet sich nach folgender Formel:

$$A = i\,L_0\,AW^2 - (j\,L_0 - k)AW$$

Dabei wird der Konstante i vorzugsweise ein Wert zwischen 0,001 bis 0,006 zugewiesen. Die Konstante j weist vorzugsweise einen Wert zwischen 0,0005 bis 0,0015 auf. Die Konstante k weist einen bevorzugten Wert zwischen 0,1 bis 1 auf, wobei [i] = dB/mm pro Grad$^2$, [j] = dB/mm pro Grad und [k] = dB pro Grad

Bei Erhöhung des Druckes p des Mediums gegenüber dem Normaldruck findet eine Signalverstärkung statt. Diese Verstärkung wird im Rahmen der vorliegenden Anmeldung als Druckverstärkung bezeichnet und sie berechnet sich nach folgender Formel:

$$DV = m\,p^3 - n\,p^2 + o\,p$$

Für

$$[m] = dB/bar^3$$

$$[n] = dB/bar^2$$

$$[o] = dB/bar$$

Dabei bevorzugt liegt der Wert des Koeffizienten m zwischen 0,01 und 0,03. Der Wert des Koeffizienten n liegt vorzugsweise zwischen 0,2 und 0,8 und der Wert des Koeffizienten o liegt vorzugsweise zwischen 2 und 8.

Wie man anhand der Formeln für die Faktoren D, MD, A und DV erkennt, hängt die Prozessdämpfung von verschiedenen Parametern ab.

Die Pfadlänge $L_0$ und der Sensorwinkel $\alpha$ sind dabei Parameter, welche durch die Messanordnung bestimmt sind. Sie hängen insbesondere von der Dimensionierung des Messrohres und der Anordnung der Ultraschallwandler im Messrohr ab.

Der Druck p und/oder die Temperatur des zu messenden Mediums im Messrohr können durch direkt im Messrohr des Ultraschall-Durchflussmessgerätes angeordnete Mess-Sensoren ermittelt werden, wie dies beispielsweise auch in Fig. 1 dargestellt ist. Dabei wird der Temperatursensor 35, in das Gehäuse des Ultraschallsensors 3 integriert, wodurch eine konstruktiv-kompakte Sensoranordnung ermöglicht wird. Dies hat den Vorteil, da sich die Temperatur oder der Druck des zu messende Mediums innerhalb des kurzen Bereichs des Messrohres zwischen der T-Messung oder p-Messung und der Ultraschallmessung nur geringfügig ändern wird. Alternativ oder zusätzlich kann auch eine Messung außerhalb des Messrohres erfolgen und die ermittelten Informationen vorzugsweise über ein Interface in eine Datenauswertung des Ultraschall-Durchflussmessgerätes übertragen werden. Alternativ oder zusätzlich kann auch die Eingabe bei bekanntem Druck und/oder bekannter Temperatur von Hand erfolgen.

Die Schallgeschwindigkeit c und/oder die Fließgeschwindigkeit u sind variable Parameter, welche anhand der Ultraschall-Durchflussmessung, vorzugsweise nach der Laufzeitdifferenzmethode, bestimmbar sind.

Sofern im Ultraschall-Durchflussmessgerät mehrere verschiedene Ultraschall-Wandlertypen bzw. Bautypen eingesetzt werden, können weitere Parameter, insbesondere die Frequenz der ausgesandten Ultraschallsignale und die Richtcharakteristik der Wandler berücksichtigt werden und als zusätzliche Terme der Signalverstärkung oder -verminderung in die Prozessdämpfung PD in die Simulation des Sollwertes der Signalstärke $SS_{Simulation}$ eingehen.

Im Anschluss an die Berechnung des Sollwertes der Signalstärke erfolgt in Schritt e) ein Vergleich des simulierten Sollwertes einer Signalstärke mit einem gemessenen Realwert der Signalstärke $SS_{Mess}$.

Während die Messung der Fließgeschwindigkeit von Flüssigkeiten vorzugsweise im Bereich über 0,5 MHz erfolgt, wird die Messung von Gasen bevorzugt unterhalb von 0,5 MHz, besonders bevorzugt unterhalt von 0,35 kHZ, insbesondere unterhalb von 250 kHz durchgeführt.

Die vorzugsweise werksseitig voreingestellte sich aus Einzeltermen zusammensetzende Prozessdämpfung PD kann vorteilhaft durch einen Offset-Parameter aufweisen. Der Offset-Parameter kann entweder schon im Werk oder erst beim Kunden, vor Inbetriebnahme aber nach Installation des Ultraschall-Durchflussmessgerätes an seinem bestimmungsgemäßen Platz in einer Anlage eingestellt werden. Im ersten Fall werden nur die Herstelltoleranzen abgeglichen, im zweiten Fall zusätzlich die konkreten Prozessbedingungen kurz nach der Inbetriebnahme korrigiert. Das hat den Vorteil, dass die werksseitige Voreinstellungen des Gerätes durch einen fachkundigen Ingenieur nach der Installation des Ultraschall-Durchflussmessgerätes in einer Anlage an die konstruktiven Gegebenheiten dieser Anlage angepasst werden können und/oder um ggf. Herstelltoleranzen, die bei der Produktion des Ultraschall-Durchflussmessgerätes aufgetreten sind, an die Vorgaben der Konstanten im Verfahren anzugleichen.

Das erfindungsgemäße Verfahren kann vorzugsweise kontinuierlich während des Messbetriebes des Gerätes gleichzeitig mit der Bestimmung der Fließgeschwindigkeit und/oder der Materialzusammensetzung des Mediums durchgeführt werden. Dadurch kann eine kontinuierliche Selbstdiagnose über den Zustand der Ultraschallwandler ermöglicht werden.

Alternativ ist es allerdings auch möglich, das Verfahren nur bei Bedarf durchzuführen um die notwendige Rechenleistung des Messgerätes nur von Zeit zu Zeit zu beanspruchen.

Durch das erfindungsgemäße Verfahren ist es möglich, altersbedingte oder verschmutzungsbedingte Betriebszustände bei Ultraschallwandlern zu erkennen und entsprechende Maßnahmen dagegen zu unternehmen, bevor es zu gravierenden Messfehlern oder zum Komplettausfall der Ultraschallwandler kommt.

So können beispielsweise rechtzeitig notwendige Austauschgeräte geordert werden und längere Ausfallzeiten von Anlagen vermieden werden. Vorzugsweise kann auch eine notwendige Reinigung der Ultraschallwandler im Betrieb erfolgen oder eine Selbstreinigung der Anlage, im CIP-Verfahren ausgelöst werden.

Es ist weiterhin von Vorteil, wenn das Verfahren einen Ist-Wert einer Abweichung $\delta(SS)_{Ist}$ zum Zeitpunkt $t_1$

zwischen dem Sollwert der simulierten Signalstärke $SS_{Simulation}$ und der tatsächlich gemessenen Signalstärke $SS_{Mess}$ ermittelt und speichert, so dass die zeitliche Entwicklung mehrerer Werte dieser Abweichung graphisch darstellbar ist. Idealerweise sollte der Wert dieser Abweichung $\delta(SS)_{Ist}$ möglichst konstant sein. Kommt es zu einem dauerhaften Abfall dieses Wertes der Abweichung $\delta(SS)_{Ist}$ von einem Wert einer Startabweichung $\delta(SS)_{Start}$ bzw. einem Startwert $\delta(SS)_{Start}$ für die Abweichung eines simulierten Sollwertes einer Signalstärke $SS_{Simulation}$ zum Zeitpunkt tstart mit einem ermittelten Realwert der Signalstärke $SS_{Mess}$ kann das Ultraschall-Durchflussmessgerät dies durch ein Ausgabesignal dem Nutzer anzeigen.

Um eine zuverlässige Aussage über einen möglichen Messausfall zu erhalten, ist es von Vorteil, wenn der von der Startabweichung 8(SS)start verschiedene Wert $\delta(SS)_{Ist}$ mindestens 3 dB, vorzugsweise mindestens 5 dB, besonders bevorzugt zwischen 9-11 dB, insbesondere 10 dB, gegenüber der Startabweichung $\delta(SS)_{Start}$, welche vorzugsweise bei Inbetriebnahme aufgenommen wurde, abweicht.

Es ist zudem denkbar, dass sich der Wert lediglich kurzfristig, aufgrund temporärer Anschmutzungen am Ultraschallwandler ändert. Daher sollte der von der Startabweichung $\delta(SS)_{Start}$ verschiedene Wert $\delta(SS)_{Ist}$ vorzugsweise zumindest mehr als 3h, vorzugsweise mehr als einen Tag von der Startabweichung $\delta(SS)_{Start}$ abweichen.

Anhand der zeitlichen Nachverfolgung des Ist-Wertes zum Zeitpunkt $t_1$ der Abweichung $\delta(SS)_{Ist}$ und dessen Vergleich zum Wert der Startabweichung 8(SS)start oder zu einem zeitlich-vorhergehenden Ist-Wert kann durch Extrapolation ermittelt werden, zu welchem Zeitpunkt ein Ausfall oder eine Fehlmessung des Ultraschall-Durchflussmessgerätes wahrscheinlich ist.

Ein Verfahren zur Überwachung des Betriebszustandes eines ersten Ultraschallwandlers in einem Ultraschall-Durchflussmessgerätes mit zumindest einem Messrohr und zumindest zwei Ultraschallwandlern bei der Durchflussmessung von Biogas ist vorzugsweise gekennzeichnet durch die folgenden Schritte:

a) Bereitstellen eines ersten Terms unter Einbeziehung der Pfadlänge eines Ultraschallsignals durch das im Messrohr befindlichen Biogas;

b) Bereitstellen eines zweiten Terms unter Einbeziehung der Pfadlänge und einer Temperatur des Mediums zum Zeitpunkt $t_1$.

c) Bereitstellen eines dritten Terms unter Einbeziehung des Sensorwinkels des ersten Ultraschallwandlers im Messrohr, der Fließgeschwindigkeit des Biogases im Messrohr, der Schallgeschwindigkeit des Biogases und der Pfadlänge;

d) Bereitstellung eines vierten Terms unter Einbeziehung des Druckes des Biogases, und

e) Zusammenfassen des ersten, zweiten, dritten und vierten Terms unter Simulation eines Sollwertes einer Signalstärke; und

f) Vergleich des simulierten Sollwertes einer Signalstärke mit einem ermittelten Realwert der Signalstärke.

## Patentansprüche

1. Verfahren zur Überwachung des Betriebszustandes eines ersten Ultraschallwandlers (3) in einem Ultraschall-Durchflussmessgerät (1) mit zumindest einem Messrohr (2) und zumindest zwei Ultraschallwandlern (3, 4) umfassend die folgenden Schritte:

a) Bereitstellung eines ersten Wertes oder mehrerer erster Werte, der sich auf die geometrische Anordnung des ersten Ultraschallwandlers (3) im Messrohr (2) und/oder auf die geometrische Anordnung des ersten Ultraschallwandlers (3) zu einem zweiten Ultraschallwandler (4) bezieht;

b) Ermittlung eines zweiten Wertes oder mehrerer zweiten Werte für eine Fließgeschwindigkeit (u) eines im Messrohr (2) befindlichen Mediums; und

c) Bereitstellung eines dritten Wertes und/oder mehrerer dritter Werte für die Temperatur (T) und/oder den Druck (p) des im Messrohr (2) befindlichen Mediums;

**gekennzeichnet durch** die Schritte:

d) Simulation eines Sollwertes einer Signalstärke ($SS_{Simulation}$) eines Ultraschallsignales oder eines Signal-zu-Rauschen-Verhältnisses ($SNR_{Simulation}$) des Ultraschallsignales unter Einbeziehung der ersten, zweiten und dritten Werte; und

e) Vergleich des simulierten Sollwertes der Signalstärke ($SS_{Simulation}$) mit einem ermittelten Realwert der Signalstärke ($SS_{Mess}$) des Ultraschallsignales oder Vergleich des simulierten Sollwertes des Signal-zu-Rauschen-Verhältnisses ($SNR_{Simulation}$) mit einem ermittelten Realwert des Signal-zu-Rauschen-Verhältnisses ($SNR_{Mess}$) des Ultraschallsignales.

**2.** Verfahren nach Anspruch 1, **dadurch gekennzeichnet, dass** die Simulation des Sollwertes der Signalstärke ($SS_{Simulation}$) oder des Signal-zu-Rauschen-Verhältnisses ($SNR_{Simulation}$) anhand von mindestens zwei unterschiedlichen der ersten, zweiten und/oder dritten Werte erfolgt.

**3.** Verfahren nach einem der Ansprüche 1 oder 2, **dadurch gekennzeichnet, dass** als erster Wert die Pfadlänge ($L_0$) eines Ultraschallsignals durch das im Messrohr (2) befindliche Medium bereitgestellt wird.

**4.** Verfahren nach einem der vorhergehenden Ansprüchen, **dadurch gekennzeichnet, dass** als erster Wert der Sensorwinkel ($\alpha$) des ersten Ultraschallwandlers (3) im Messrohr (2) bereitgestellt wird

**5.** Verfahren nach einem der vorhergehenden Ansprüche, **dadurch gekennzeichnet, dass** eine Ermittlung eines vierten Wertes oder mehrerer vierter Werte für eine Schallgeschwindigkeit (c) eines im Messrohr (2) befindlichen Mediums erfolgt, wobei der vierte Wert in die Simulation eines Sollwertes einer Signalstärke ($SS_{Simulation}$) oder eines Signal-zu-Rauschen-Verhältnisses ($SNR_{Simulation}$) einbezogen wird.

**6.** Verfahren nach einem der vorhergehenden Ansprüche, **dadurch gekennzeichnet, dass** durch den Vergleich des simulierten Sollwertes einer Signalstärke ($SS_{Simulation}$) mit einem ermittelten Realwert der Signalstärke ($SS_{Mess}$) ein Ist-Wert für die Abweichung ($\delta(SS)_{Ist}$) zu einem Zeitpunkt $t_1$ ermittelt wird.

**7.** Verfahren nach Anspruch 6 **dadurch gekennzeichnet, dass**

ein Startwert ($\delta(SS)_{Start}$) für die Abweichung eines simulierten Sollwertes einer Signalstärke ($SS_{Simulation}$) zum Zeitpunkt $t_{Start}$ mit einem ermittelten Realwert der Signalstärke ($SS_{Mess}$) ermittelt wird
und der Ist-Wert ($\delta(SS)_{Ist}$) des simulierten Sollwertes der Signalstärke ($SS_{Simulation}$) zum späteren Zeitpunkt $t_1$ mit dem ermittelten Realwert der Signalstärke ($SS_{Mess}$) zum späteren Zeitpunkt $t_1$ ermittelt wird, wobei ein Hinweis bezüglich des Betriebszustandes des ersten Ultraschallwandlers (3) erfolgt, sofern der Ist-Wert ($\delta(SS)_{Ist}$) um mindestens 3 dB, vorzugsweise mindestens 5 dB, besonders bevorzugt zwischen 9-11 dB, insbesondere 10 dB vom Startwert ($\delta(SS)_{Start}$) abweicht.

**8.** Verfahren nach einem der Ansprüche 6 oder 7, **dadurch gekennzeichnet, dass** ein Startwert ($\delta(SS)_{Start}$) für die Abweichung eines simulierten Sollwertes einer Signalstärke ($SS_{Simulation}$) zum Zeitpunkt $t_{Start}$ mit einem ermittelten Realwert der Signalstärke ($SS_{Mess}$) ermittelt wird

und zwei oder mehr Ist-Werte ($\delta(SS)_{Ist}$) der Abweichungen von simulierten Sollwerten der Signalstärke ($SS_{Simulation}$) zu späteren Zeitpunkten $t_1$, $t_2$, ... $t_n$ mit dem ermittelten Realwert der Signalstärke ($SS_{Mess}$) zu den späteren Zeitpunkt $t_1$, $t_2$, ... $t_n$ ermittelt werden,
wobei anhand der zeitlichen Änderung der Ist-Werte ($\delta(SS)_{Ist}$) eine Vorhersage über die Ausfallwahrscheinlichkeit des Ultraschallwandlers (3) getroffen wird.

**9.** Verfahren nach einem der vorhergehenden Ansprüche , **dadurch gekennzeichnet, dass** ein Startwert ($\delta(SS)_{Start}$) für die Abweichung eines simulierten Sollwertes einer Signalstärke ($SS_{Simulation}$) zum Zeitpunkt $t_{Start}$ mit einem ermittelten Realwert der Signalstärke ($SS_{Mess}$) ermittelt wird und der Ist-Wert ($\delta(SS)_{Ist}$) der Abweichung des simulierten Sollwertes der Signalstärke ($SS_{Simulation}$) zum späteren Zeitpunkt $t_1$ mit dem ermittelten Realwert der Signalstärke ($SS_{Mess}$) zum späteren Zeitpunkt $t_1$ ermittelt wird, wobei ein Hinweis bezüglich eines Betriebszustandes des ersten Ultraschallwandlers (3) erfolgt, sofern der Ist-Wert ($\delta(SS)_{Ist}$) mehr als 1h, vorzugsweise mehr als 24h, besonders bevorzugt mehr als 48h um mindestens 3 dB, vorzugsweise mindestens 5 dB, besonders bevorzugt zwischen 9-11 dB, insbesondere 10 dB vom Startwert ($\delta(SS)_{Start}$) abweicht.

**Claims**

**1.** A method for monitoring the operating state of a first ultrasonic transducer (3) in an ultrasonic flowmeter (1) with at least one measuring tube (2) and at least two ultrasonic transducers (3, 4), comprising the following steps:

a) Providing a first value or multiple first values which relate to the geometric arrangement of the first ultrasonic transducer (3) in the measuring tube (2) and/or to the geometric arrangement of the first ultrasonic transducer (3) relative to a second ultrasonic transducer (4);
b) Determining a second value or multiple second values for a flow velocity (u) of a medium located in the measuring tube (2); and

c) Providing a third value and/or multiple third values for the temperature (T) and/or the pressure (p) of the medium located in the measuring tube (2); **characterized by** the following steps:

d) Simulating a target value for a signal strength ($SS_{Simulation}$) of an ultrasonic signal or a signal-to-noise ratio ($SNR_{Simulation}$) of the ultrasonic signal using the first, second, and third values; and

e) Comparing the simulated target value for the signal strength ($SS_{Simulation}$) with a measured real value of the signal strength ($SS_{Mess}$) of the ultrasonic signal or comparing the simulated target value for the signal-to-noise ratio ($SNR_{Simulation}$) with a measured real value of the signal-to-noise ratio ($SNR_{Mess}$) of the ultrasonic signal.

2. The method as claimed in claim 1, **characterized in that** the target value for the signal strength ($SS_{Simulation}$) or the signal-to-noise ratio ($SNR_{Simulation}$) is simulated using at least two different values out of the first, second, and/or third values.

3. The method as claimed in one of claims 1 or 2, **characterized in that** the path length ($L_0$) of an ultrasonic signal through the medium located in the measuring tube (2) is provided as the first value.

4. The method as claimed in one of the preceding claims, **characterized in that** the sensor angle ($\alpha$) of the first ultrasonic transducer (3) in the measuring tube (2) is provided as the first value.

5. The method as claimed in one preceding claims, **characterized in that** a fourth value or multiple fourth values for an acoustic velocity (c) of a medium located in the measuring tube (2) are determined, wherein the fourth value is used in the simulation of a target value for a signal strength ($SS_{Simulation}$) or a signal-to-noise ratio ($SNR_{Simulation}$).

6. The method as claimed in one of the preceding claims, **characterized in that** an actual value of the deviation ($\delta(SS)_{Ist}$) at a time point $t_1$ is determined by comparing the simulated target value for a signal strength ($SS_{Simulation}$) with a measured real value of the signal strength ($SS_{Mess}$).

7. The method as claimed in claim 6, **characterized in that**
a starting value ($\delta(SS)_{Start}$) for the deviation of a simulated target value for a signal strength ($SS_{Simulation}$) at the time point $t_{Start}$ is determined using a measured real value of the signal strength ($SS_{Mess}$), and the actual value ($\delta(SS)_{Ist}$) of the simulated target value for the signal strength ($SS_{Simulation}$) at the later time point $t_1$ is determined using the measured real value of the signal strength ($SS_{Mess}$) at the later time point $t_1$, wherein a notification regarding the operating state of the first ultrasonic transducer (3) is provided if the actual value ($\delta(SS)_{Ist}$) differs from the starting value ($\delta(SS)_{Start}$) by at least 3 dB, preferably at least 5 dB, particularly preferably between 9 and 11 dB, in particular 10 dB.

8. The method as claimed in one of claims 6 or 7, **characterized in that** a starting value ($\delta(SS)_{Start}$) for the deviation of a simulated target value for a signal strength ($SS_{Simulation}$) at the time point $t_{Start}$ is determined using a measured real value of the signal strength ($SS_{Mess}$), and two or more actual values ($\delta(SS)_{Ist}$) for the deviations of simulated target values for the signal strength ($SS_{Simulation}$) at later time points $t_1$, $t_2$ to $t_n$ are determined using the measured real value of the signal strength ($SS_{Mess}$) at the later time points $t_1$, $t_2$ to $t_n$,
wherein a prediction is made regarding the failure probability of the ultrasonic transducer (3) based on the development of the actual values ($\delta(SS)_{Ist}$) over time.

9. The method as claimed in one of the preceding claims, **characterized in that** a starting value ($\delta(SS)_{Start}$) for the deviation of a simulated target value for a signal strength ($SS_{Simulation}$) at the time point $t_{Start}$ is determined using a measured real value of the signal strength ($SS_{Mess}$), and the actual value ($\delta(SS)_{Ist}$) of the deviation of the simulated target value for the signal strength ($SS_{Simulation}$) at the later time point $t_1$ is determined using the measured real value of the signal strength ($SS_{Mess}$) at the later time point $t_1$, wherein a notification regarding the operating state of the first ultrasonic transducer (3) is provided if the actual value ($\delta(SS)_{Ist}$) differs from the starting value ($\delta(SS)_{Start}$) by at least 3 dB, preferably at least 5 dB, particularly preferably between 9 and 11 dB, in particular 10 dB, for more than 1 hour, preferably more than 24 hours, particularly preferably more than 48 hours

**Revendications**

1. Procédé destiné à la surveillance de l'état de fonctionnement d'un premier transducteur à ultrasons (3) dans un débitmètre à ultrasons (1) avec au moins un tube de mesure (2) et au moins deux transducteurs à ultrasons (3, 4), lequel procédé comprend les étapes suivantes :

a) Fourniture d'une première valeur ou de plusieurs premières valeurs qui se rapportent à la disposition géométrique du premier transducteur à ultrasons (3) dans le tube de mesure (2) et/ou à la disposition géométrique du premier transducteur à ultrasons (3) par rapport à un deuxième transducteur à ultrasons (4) ;
b) Détermination d'une deuxième valeur ou de plusieurs deuxièmes valeurs pour une vitesse d'écoulement (v) d'un produit se trouvant dans le tube de mesure (2) ; et
c) Fourniture d'une troisième valeur et/ou de plusieurs troisièmes valeurs pour la température (T) et/ou la pression (p) du produit se trouvant dans le tube de mesure (2) ;

**caractérisé par** les étapes suivantes :

d) Simulation d'une valeur de consigne d'une intensité de signal ($SS_{Simulation}$) d'un signal ultrasonore ou d'un rapport signal/bruit ($SNR_{Simulation}$) du signal ultrasonore en incluant les première, deuxième et troisième valeurs ; et
e) Comparaison de la valeur de consigne simulée de l'intensité du signal ($SS_{Simulation}$) avec une valeur réelle déterminée de l'intensité du signal ($SS_{Mess}$) du signal ultrasonore ou comparaison de la valeur de consigne simulée du rapport signal/bruit ($SNR_{Simulation}$) avec une valeur réelle déterminée du rapport signal/bruit ($SNR_{Mess}$) du signal ultrasonore.

2. Procédé selon la revendication 1, **caractérisé en ce que** la simulation de la valeur de consigne de l'intensité du signal ($SS_{Simulation}$) ou du rapport signal/bruit ($SNR_{Simulation}$) est effectuée à l'aide d'au moins deux valeurs différentes parmi les première, deuxième et/ou troisième valeurs.

3. Procédé selon l'une des revendications 1 ou 2, **caractérisé en ce que** la première valeur fournie est la longueur de trajet ($L_0$) d'un signal ultrasonore à travers le produit présent dans le tube de mesure (2).

4. Procédé selon l'une des revendications précédentes, **caractérisé en ce que** l'angle de détection ($\alpha$) du premier transducteur ultrasonore (3) dans le tube de mesure (2) est fourni comme première valeur.

5. Procédé selon l'une des revendications précédentes, **caractérisé en ce qu'**une détermination d'une quatrième valeur ou de plusieurs quatrièmes valeurs pour une vitesse du son (c) d'un produit se trouvant dans le tube de mesure (2) est effectuée, la quatrième valeur étant incluse dans la simulation d'une valeur de consigne d'une intensité de signal ($SS_{Simulation}$) ou d'un rapport signal/bruit ($SNR_{Simulation}$).

6. Procédé selon l'une des revendications précédentes, **caractérisé en ce que** la comparaison de la valeur de consigne simulée d'une intensité de signal ($SS_{Simulation}$) avec une valeur réelle déterminée de l'intensité de signal ($SS_{Mess}$) permet de déterminer une valeur réelle pour l'écart ($\delta(SS)_{ist}$) à un instant $t_1$.

7. Procédé selon la revendication 6, **caractérisé en ce qu'**une valeur de départ ($\delta(SS)_{Start}$) pour l'écart d'une valeur de consigne simulée d'une intensité de signal ($SS_{Simulation}$) est déterminée à l'instant $t_{Start}$ avec une valeur réelle déterminée de l'intensité de signal ($SS_{Mess}$) et la valeur réelle de la valeur de consigne simulée de l'intensité de signal ($SS_{Simulation}$) à l'instant ultérieur $t_1$ est déterminée avec la valeur réelle déterminée de l'intensité de signal ($SS_{Mess}$) à l'instant ultérieur $t_1$, une indication concernant l'état de fonctionnement du premier transducteur à ultrasons (3) étant donnée dans la mesure où la valeur réelle s'écarte de la valeur de départ ($\delta(SS)_{Start}$) d'au moins 3 dB, de préférence d'au moins 5 dB, de manière particulièrement préférée entre 9 et 11 dB, notamment 10 dB.

8. Procédé selon l'une des revendications 6 ou 7, **caractérisé en ce qu'**une valeur de départ ($\delta(SS)_{Start}$) pour l'écart d'une valeur de consigne simulée d'une intensité de signal ($SS_{Simulation}$) est déterminée à l'instant $t_{Start}$ avec une valeur réelle déterminée de l'intensité de signal ($SS_{Mess}$)

et deux ou plusieurs valeurs réelles ($\delta(SS)_{ist}$) des écarts des valeurs de consigne simulées de l'intensité de signal ($SS_{Simulation}$) sont déterminées à des instants ultérieurs $t_1, t_2, ... t_n$ avec la valeur réelle déterminée de l'intensité de signal ($SS_{Mess}$) aux instants ultérieurs $t_1, t_2, ... t_n$, une prévision de la probabilité de défaillance du transducteur à ultrasons (3) étant établie à l'aide de la modification temporelle des valeurs réelles ($\delta(SS)_{ist}$).

9. Procédé selon l'une des revendications précédentes, **caractérisé en ce qu'**une valeur de départ ($\delta$(SS)$_{Start}$) pour l'écart d'une valeur de consigne simulée d'une intensité de signal (SS$_{Simulation}$) à l'instant t$_{Start}$ est déterminée avec une valeur réelle déterminée de l'intensité de signal (SS$_{Mess}$) et la valeur réelle de l'écart de la valeur de consigne simulée de l'intensité de signal (SS$_{Simulation}$) à l'instant ultérieur t$_1$ est déterminée avec la valeur réelle déterminée de l'intensité de signal (SS$_{Mess}$) à l'instant ultérieur t$_1$, une indication concernant un état de fonctionnement du premier transducteur à ultrasons (3) étant donnée dans la mesure où la valeur réelle s'écarte de la valeur de départ ($\delta$(SS)$_{Start}$) d'au moins 3 dB, de préférence d'au moins 5 dB, de manière particulièrement préférée entre 9 et 11 dB, notamment 10 dB, pendant plus de 1 h, de préférence pendant plus de 24 h, de manière particulièrement préférée pendant plus de 48 h.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010035859 A1
- US 2009240453 A1

- DE 102006030964
- DE 102006030954